# EUROPEAN PATENT APPLICATION

(11) **EP 4 790 816 A2**
(43) Date of publication of application: **12.08.2026**
(21) Application number: 26153065.3
(22) Date of filing: 20.01.2026
(51) Int. Cl.: H01M 50/367, H01M 50/209, H01M 50/383, H01M 50/358

(54) **BATTERY ASSEMBLY**

(30) Priority: 20.01.2025 KR 20250008162
(71) Applicant: SK On Co., Ltd., Seoul 03161 (KR)
(72) Inventor: JANG, Yong Hee, Daejeon 34124 (KR); LEE, Dae Hyeon, Daejeon 34124 (KR); JEONG, Ju Young, Daejeon 34124 (KR); CHOI, Keun Woo, Daejeon 34124 (KR)
(74) Representative: Stolmár & Partner Patentanwälte PartG mbB

(57) **Abstract**

The present disclosure relates to a battery assembly. The battery assembly may comprise: a plurality of battery cells arranged along a stacking direction; and a housing case containing the plurality of battery cells and including at least one end plate; wherein the end plate has a length dimension that extends parallel to the stacking direction and forms a first side of the housing case. The at least one end plate has one or more first type of venting holes penetrating it. The battery assembly possesses improved thermal stability, extended battery life and improved structural stability.

## Description

### [Technical Field]

This disclosure relates to a battery assembly.

### [Background Art]

To increase the capacity and output of secondary batteries, multiple cells can be bundled together for use. That is, they can be utilized as a battery assembly formed by electrically connecting multiple battery cells. A battery assembly can be categorized as a battery assembly unit or a battery pack, depending on the unit.

Due to its structure containing multiple battery cells, a battery assembly faces the problem that heat or gas from a specific battery cell can easily propagate to adjacent cells. Consequently, there is a need for measures to improve the stability of battery assemblies.

### [Disclosure]

### [Technical Problem]

According to one aspect of the present disclosure, an object is to provide a battery assembly with improved thermal stability.

According to another aspect of the present disclosure, an object is to provide a battery assembly with extended battery life.

According to another aspect of the present disclosure, an object is to provide a battery assembly with improved structural stability.

Meanwhile, the present disclosure may be widely applied in the fields of electric vehicles, battery charging stations, energy storage systems, and other green technologies such as photovoltaics and wind power that utilize battery cells. Furthermore, the present invention may be used in eco-friendly mobility, including electric vehicles and hybrid vehicles, to prevent climate change by suppressing air pollution and green-house gas emissions.

### [Technical Solution]

A battery assembly according to an embodiment of the present disclosure may comprise: a plurality of battery cells stacked along a stacking direction; and a housing case containing the plurality of battery cells and including an end plate; wherein the end plate may extend along the stacking direction and form a first side of the housing case, and have one or more first type of venting holes penetrating it.

In an embodiment, at least a portion of the one or more first type of venting holes may be arranged to align with cell tabs of the plurality of battery cells.

In an embodiment, the battery assembly may further comprise: one or more barrier members having a pad shape and arranged between the plurality of battery cells along the stacking direction.

In an embodiment, at least a portion of the one or more first type of venting holes may be arranged to align with the barrier member.

In an embodiment, the one or more first type of venting holes may be arranged along the stacking direction.

In an embodiment, the battery assembly may further comprise: a cover portion connected to the end plate and forming a third side of the housing case, wherein the cover portion may further comprise a second type of venting hole penetrating the cover portion along a height dimension of the housing case.

A battery assembly according to another embodiment of the present disclosure may comprise: a plurality of battery cells stacked along a stacking direction; and a housing case containing the plurality of battery cells and including an end plate, wherein the end plate may comprise a first end plate member and a second end plate member and forms a first side of the housing case; wherein the first end plate member may comprise one or more of first member sub-venting holes penetrating it; wherein the second end plate member may comprise one or more of second member sub-venting holes penetrating it; and wherein the second end plate member may be spaced apart from the first end plate member by a gap distance.

In another embodiment, at least one of the one or more first member sub-venting holes and the second member sub-venting holes may be arranged to align with the cell tabs of the plurality of battery cells.

In another embodiment, the first member sub-venting holes and the second member sub-venting holes may be arranged to align with each other.

In another embodiment, the one or more first member sub-venting holes and the one or more second member sub-venting holes may be spaced apart from each other.

In another embodiment, the battery assembly may further comprise: one or more barrier members having a pad shape and arranged between the battery cells along the stacking direction.

In another embodiment, at least one of the first member sub-venting holes and the second member sub-venting holes may be arranged to align with the barrier member.

In another embodiment, the first member sub-venting holes and the second member sub-venting holes may be in communication with each other.

In another embodiment, the battery assembly may further comprise: a cover portion connected to the end plate and forming a third side of the housing case, wherein the cover portion may further comprise a second type of venting hole penetrating the cover portion along a height dimension of the housing case.

In another embodiment, the battery assembly may further comprise: a third type of venting hole being in communication with at least a portion of a separation space between the first end plate member and the second end plate member, to the exterior of the housing case along a height dimension of the housing case.

### [Description of Drawings]

FIG. 1 is a drawing illustrating a battery assembly according to an embodiment of the present disclosure.
FIG. 2 is an exploded view of the battery assembly according to an embodiment of the present disclosure.
FIG. 3 is a diagram illustrating battery cells according to an embodiment of the present disclosure.
FIG. 4 is a schematic cross-sectional view illustrating an embodiment of the battery assembly along line AA' in FIG. 1.
FIG. 5 is a schematic diagram illustrating an example of a side view of the battery assembly shown in FIG. 4.
FIG. 6 is a schematic diagram illustrating another example of the side view of the battery assembly shown in FIG. 4.
FIG. 7 is a schematic cross-sectional view illustrating another embodiment of the battery assembly along line AA' in FIG. 1.
FIG. 8 is a schematic diagram illustrating an example of a side view of the battery assembly shown in FIG. 7.
FIG. 9 is a schematic diagram illustrating another example of the side view of the battery assembly shown in FIG. 7.
FIG. 10 is a schematic diagram illustrating another embodiment of the side of the battery assembly shown in FIG. 7.

### [Modes of the Invention]

Hereinafter, the present disclosure will be described in detail with reference to the accompanying drawings. However, this is merely illustrative, and the present disclosure is not limited to the specific embodiments described by way of example.

In this disclosure, reference to the "X-dimension" may refer to the dimension in which battery cells are stacked, e.g., "the stacking direction" of the battery cell 100, reference to the "Y-dimension" may refer to the dimension parallel to the direction in which cell tabs of the battery cells protrude, e.g., "protrusion direction" of the cell tab 120, and reference to the "Z-dimension" may refer to "the height dimension" or vertical dimension of the battery assembly. As will be understood by a skilled artisan, the X-, Y-, and Z-dimensions are perpendicular to one another. However, reference to the X-dimension, Y-dimension, and Z-dimension as used herein are only to facilitate a clear understanding of the present disclosure, and it is understood that these dimensions may be defined differently depending on the chosen reference point.

Meanwhile, in this disclosure, the terms "battery," "secondary battery," or "cell" are used interchangeably with "battery cell."

Provided herein is a battery assembly having a housing case that contains a plurality of battery cells stacked along a defined stacking direction. The housing case comprises at least one end plate (e.g., two end plates) that extends along the stacking direction to form a first side (and/or second) of the case and comprises one or more first-type venting holes that penetrate the end plate to communicate the interior of the housing space with the exterior. In certain embodiments, the first type of venting holes are located to align with cell tabs protruding from the battery cells, enabling efficient pressure and gas relief adjacent to cell tab regions. The specification also describes barrier members of pad shape disposed between adjacent cells along the stacking direction, which may overlap with first type of venting holes so that the barriers communicate with the exterior.

The housing case can further comprise a cover portion forming the third side and having a second type of venting hole that penetrate the cover along the height direction of the housing case to enhance venting and reduce pressure rise. The shapes and arrangements of the first type and second type of venting holes can vary (e.g., square, polygonal, circular, or elliptical), and they may be arranged in one or multiple rows along the stacking direction.

In another embodiment, the end plate is formed as a double-wall structure comprising a first end plate member and a second end plate member that are spaced apart in the cell tab-protrusion direction to define a gap between them. Each of the first and second end plate members comprises a respective sub-venting hole, which may be mutually aligned or spaced, and may be arranged to overlap with cell tabs or barrier members. A third type of venting hole may communicate at least a portion of the gap with the exterior of the housing case along the height dimension, thereby promoting multi-directional vent guidance and mitigating flame propagation. The foregoing venting architectures and barrier placements help reduce pressure/temperature rise and suppress flame spread between adjacent cells, thereby improving thermal stability.

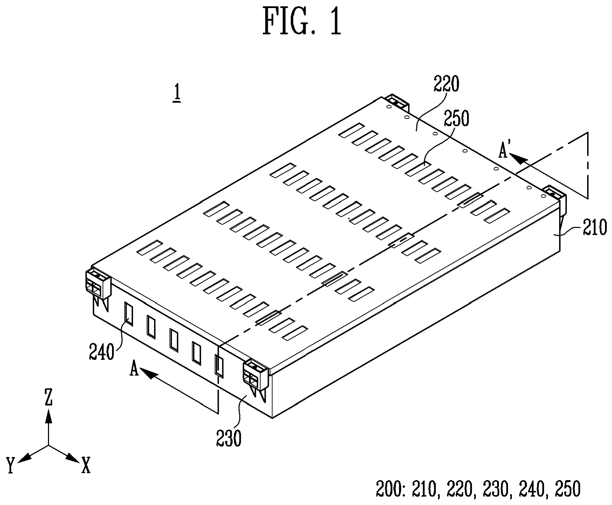

FIG. 1 is a drawing illustrating a battery assembly according to an embodiment of the present disclosure.

Referring to FIG. 1, the battery assembly 1 according to an embodiment of the present disclosure may comprise a housing case 200. The housing case 200 may comprise a support body 210, a cover portion 220, at least one (e.g., two) end plate 230, a first type of venting hole 240, and a second type of venting hole 250.

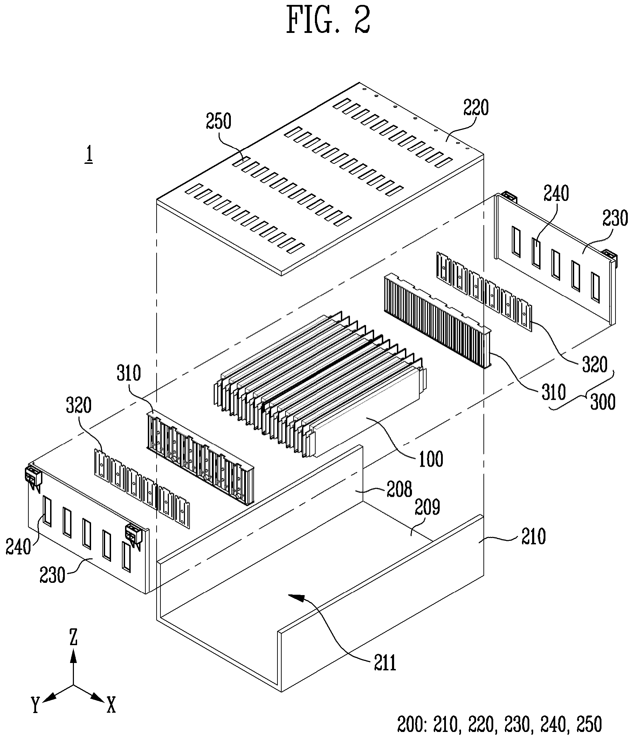

The support body 210, cover portion 220, and end plate 230 can be combined (or coupled) with each other to form the housing case 200. For example, the support body 210, cover portion 220, and the at least one end plate 230 can be arranged to form a housing case 200 with an interior space (not visible in FIG. 1 due to the aspect shown) into which a plurality of battery cells 100 can be disposed. The support body 210, cover portion 220, and at least one end plate 230 can protect the plurality of battery cells 100, referring to FIG. 2 (an exploded view of the battery assembly), accommodated within the interior space from external impacts or foreign objects. In other words, the battery assembly 1 may be a broad concept encompassing a battery module or battery pack, which groups one or more battery cells 100 into a housing case 200 to protect them from external impacts, heat, vibration, etc., and to achieve high-power and high-capacity characteristics.

In certain embodiments, the support body 210, cover portion 220, and two end plates 230 are arranged with each other to form the housing case 200.

Materials suitable for fabricating the support body 210, cover portion 220, and at least one end plate 230 are not particularly limited, and in certain embodiments, may each independently comprise aluminum, iron, or polymer. However, this is merely illustrative and not limiting.

The at least one end plates 230 may form a first side of the housing case 200. In embodiments comprising two end plates, the two end plates 230 form a first and second side of the housing case 200. The cover portion 220 is connected to the at least one end plate 230 (and in certain embodiments, both of the end plates 230) and forms a third side of the housing case 200. For example, the cover portion 220 may form a side of the housing case 200 that is different from the first side of the housing case 200 formed by the at least one end plate 230.

The cover portion 220 may comprise a second type of venting hole 250. For example, the cover portion 220 may comprise a second type of venting hole 250 that penetrates the cover portion 220 in a cover portion thickness dimension, which is parallel to a height dimension, e.g., the Z-dimension, of the housing case 200.

The second type of venting hole 250 may be an opening formed in the height dimension, e.g., Z-dimension of the housing case 200. A plurality of the second type of venting holes 250 may be arranged in the cover portion 220, such as shown in FIG. 1.

For example, each of the at least one end plates 230 may have a length dimension that extends parallel to the stacking direction of the battery cell 100 to form a side of the housing case 200. For example, each of the at least one end plate 230 may extend in an X-dimension to form the "sides" of the housing case 200 as shown in FIG. 1 and 2.

Each of the at least one end plates 230 may comprise one or more (e.g., a plurality of) a first type of venting hole 240 that penetrate through the end plate 230, e.g., in an end plate thickness dimension, which is perpendicular to the end plate length dimension. The first type of venting hole 240 may penetrate the end plate 230 in the protruding dimension of the cell tabs 120, referring to FIG. 2, of the battery cell 100.

FIG. 2 is an exploded view of the battery assembly according to an embodiment of the present disclosure.

Referring to FIG. 2, the battery assembly 1 according to an embodiment of the present disclosure may comprise a plurality of stacked battery cells 100, a housing case 200, and at least one busbar assembly 300.

Each of the battery cells 100 may comprise an electrode assembly and a casing. The casing of the battery cell 100 may accommodate an electrode assembly and electrolyte. The casing may be implemented in any number of various types, such as pouch type, prismatic type, or cylindrical type, depending on the desired form.

The plurality of battery cells 100 may be secondary batteries of varying types, such as lithium-ion batteries, vanadium-ion batteries, all-solid-state batteries, metal-air batteries, sodium-ion batteries, and aluminum-ion batteries.

Each battery cell 100 may comprise a cathode and an anode. The cathode may comprise a cathode active material into which lithium ions can be inserted and extracted. The anode may comprise an anode active material into which lithium ions can be inserted and extracted. Each battery cell 100 may further comprise a separator to prevent electrical shorting between the anode and cathode and to allow ion flow.

In an embodiment, the anode, cathode, and separator may be stacked to form an electrode assembly. The electrode assembly may be classified as stacking, winding, stack-folding, or Z-stacking depending on the method by which the anode, cathode, and separator are stacked. Each battery cell 100 of the present disclosure is not limited to any single stacking method and each may comprise an electrode assembly stacked in any number of manners. In other words, each battery cell 100 of the present disclosure can store and supply electrical energy by including an electrode assembly stacked in a manner to optimize performance, which will be recognized by one of skill in the art.

A plurality of battery cells 100 can be stacked in the X-dimension. The plurality of battery cells 100 can be stacked at regular intervals in the X-dimension. Multiple battery cells 100 can output or store electrical energy.

The housing case 200 can accommodate battery cells 100 placed inside the housing case 200. For example, the support body 210, cover portion 220, and at least one end plate 230 can accommodate multiple battery cells 100 internally. The support body 210 and cover portion 220 may be connected to form a hexahedral shape with open sides (i.e., sides of the housing case arranged in the X-Z planar dimensions. When the at least one end plate is secured to open side in the above arrangement, The support body 210, cover portion 220, and at least one end plate 230 can prevent damage to the plurality of battery cells 100 from external impacts, heat, vibration, or pressure.

The support body 210 may comprise two side surfaces 208 and a bottom surface 209 as shown in FIG. 2, forming an opening 211 directed toward the top (or in the Z-dimension) of the housing case 200 and openings in each of the Y-dimensions to accommodate the at least one end plate 230. During manufacture, before disposing the cover portion, through the opening 211, a plurality of battery cells 100 may be arranged on a bottom surface 209 of the support body 210. The support body 210 may comprise two side surfaces in the X-Y dimension to cover the plurality of battery cells 100. In an embodiment, the support body 210 may have a "U" shape, such as shown in FIG. 2.

The support body 210 may overlap or be aligned with at least a portion of the plurality of battery cells 100. For example, at least a portion of a side surface 208 of the support body 210 may be aligned with a portion of the plurality of battery cells 100. The bottom surface 209 of the support body 210 may be positioned beneath the plurality of battery cells 100. At least a portion of the bottom surface 209, of the support body 210 may be aligned with or contact a bottom surface, e.g., the surface on which each of the battery cells 100 rest. The support body 210 can support the plurality of battery cells 100.

The support body 210 may have high thermal conductivity characteristics. For example, the battery assembly 1 may comprise a heat transfer member between the support body 210 and the plurality of battery cells 100. The heat transfer member may have adhesive properties and thermal conductivity above a reference value. For example, the material of the heat transfer member may be a polymer material having high thermal conductivity, such as an epoxy or urethane series material. However, the material from which the heat transfer member is made is not limited thereto.

The cover portion 220 may be coupled to the support body 210. The cover portion 220 may form an inner surface of, or cover, the interior space when coupled to the support body 210. The cover portion 220 may cover the opening 211 of the support body 210. The cover portion 220 may be aligned with at least a portion of the plurality of battery cells 100. For example, the cover portion 220 may be aligned with the upper surface, e.g., a surface of the battery cell 100, of each of the plurality of battery cells 100. The cover portion 220 may cover at least a portion of the upper surfaces of the plurality of battery cells 100. In certain embodiments, arrangement of the support body 210, at least one end plate 230, and cover portion 220, fully encapsulate (fully overlap) the plurality of battery cells within the interior space thus created by the arrangement.

The cover portion 220 may be aligned with or cover the busbar assembly. For example, the cover portion 220 may cover a top surface (the surface in the X-Z plane) of the busbar assembly 300.

The at least one end plate 230 may be connected to the support body 210 and the cover portion 220 to form a first side of the interior space within the housing case 200 containing a plurality of battery cells 100. A second end plate 230 may close the second side of the interior space within the housing case. The plurality of battery cells 100 may be positioned between two end plates 230 in the Y-dimension. For example, one end plate 230 may be positioned on one side a plurality of battery cells 100, and another end plate 230 may be positioned on an opposite side of the plurality of battery cells 100.

The at least one end plate 230 may align with at least a portion of the at least one busbar assembly 300. For example, the at least one end plate 230 may align with one face of the busbar assembly 300 when viewed from the Y-dimension.

The busbar assembly 300 may electrically connect two or more battery cells within the plurality of battery cells 100.

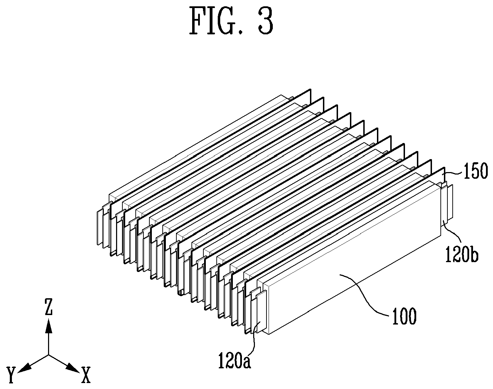

FIG. 3 is a diagram illustrating battery cells according to an embodiment of the present disclosure. Referring to FIG. 3, the busbar assembly 300 (shown in FIG. 2) can extend along the stacking direction of the plurality of battery cells 100 to connect to the cell tabs 120a, 120b of the battery cells 100. The busbar assembly 300 may be positioned on the support body 210 proximal to the plurality of battery cells 100 in the Y-dimension. The busbar assembly 300 may extend along the X-dimension in which the plurality of battery cells 100 are stacked.

The busbar assembly 300 may comprise a busbar frame 310 and a busbar 320. The busbar 320 may be connected to the busbar frame 310. The busbar frame 310 may be positioned between the busbar 320 and the plurality of battery cells 100.

Furthermore, referring to FIG. 3, the cell tabs 120a, 120b of the battery cells 100 may penetrate holes in the busbar frame 310. For example, the busbar frame 310 may comprise one or more slits. The cell tabs 120a, 120b may be inserted into the busbar 320 by passing through the slits in the busbar frame 310.

Multiple busbars 320 may be provided. Each busbar 320 may be connected to a busbar frame 310 on the side of the busbar frame 310 that does not face the plurality of battery cells 100. Cell tabs 120a, 120b in may be inserted into the busbar 320, electrically connecting the plurality of battery cells 100 to the busbar 320. Referring to FIG. 3, the busbar 320 may comprise a hole into which the cell tabs 120a, 120b are inserted. For example, the busbar 320 may comprise a slit.

A plurality of battery cells 100 may comprise cell tabs 120a, 120b. The cell tabs 120a, 120b may protrude from the plurality of battery cells 100, for example, in a Y-dimension. In FIG. 3, the cell tabs 120a, 120b are shown protruding in the Y-dimension, but the embodiments are not limited thereto. For example, the cell tabs 120a, 120b may protrude in an X-dimension from a plurality of battery cells 100. In another example, the cell tabs 120a, 120b may protrude in a Z-dimension from a plurality of battery cells 100.

Each battery cell 100 may comprise a first cell tab 120a and a second cell tab 120b. The first cell tab 120a may be electrically connected to one of the anode and cathode of the electrode assembly, and the second cell tab 120b may be electrically connected to the other of the anode and cathode.

Referring to FIG. 3, the battery assembly may further comprise one or more barrier members 150, each having a pad shape, and which are disposed between adjacent battery cells 100 within the plurality of battery cells along the stacking direction. For example, the barrier member 150 may be disposed between adjacent battery cells in at least one location within plurality of battery cells 100. One side surface of the barrier member 150 may be contacted by a battery cell 100.

The barrier member 150 may be made from or comprise a fire-resistant material. For instance, the fire-resistant material may comprise one or more of mica, epoxy, silica, aerogel, ceramic wool, urethane, or any material with excellent heat resistance and insulation properties.

In the X-dimension, the ends of the barrier member 150 may be positioned between the cell tabs 120a, 120b to form a physical barrier between the cell tabs 120a, 120b. For example, the barrier members 150 may be alternately positioned between adjacent battery cells with cell tabs 120a, 120b. For example, one of the barrier members 150 may be positioned between a cell tab 120b protruding in the Y-dimension of one battery cell 100 among the plurality of battery cells 100 and another cell tab 120b protruding in the Y-dimension of another battery cell 100 adjacent to the one battery cell 100 in the X-dimension (or stacking direction).

FIG. 3 shows two battery cells 100 arranged between barrier member 150, but the embodiments are not limited thereto. The number of battery cells 100 arranged between adjacent barrier member 150 may be varied according to the embodiments.

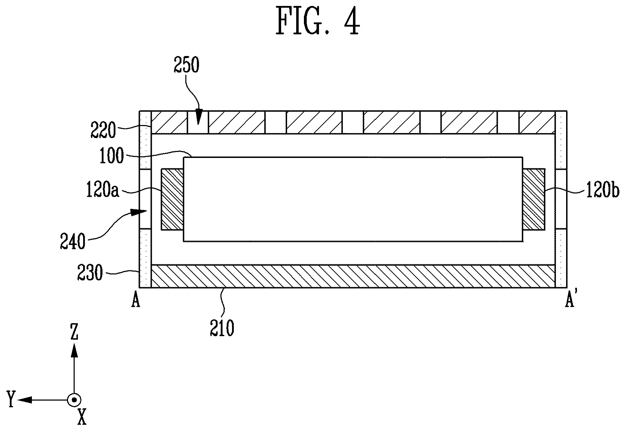

FIG. 4 is a schematic cross-sectional view illustrating an embodiment of the battery assembly along line AA' in FIG. 1.

Referring to FIG. 4, the first type of venting hole 240 may be positioned proximal to cell tabs 120a, 120b. The first type of venting hole 240 is positioned proximal to cell tabs 120a, 120b in the Y-dimension, allowing communication between the interior space of the housing case 200 (shown in FIG. 2) and the exterior of the housing. For example, the first type of venting hole 240 may be positioned proximal to the cell tab 120 in the Y-dimension, thereby connecting the space proximal to the cell tab 120 within the interior space of the housing case 200 to the outside.

A plurality of second type of venting holes 250 may penetrate the cover portion 220. For example, the cover portion 220 may comprise second type of venting holes 250, each penetrating the cover portion 220 along the height dimension of the housing case 200. In this case, each of the second type of venting holes 250 penetrate the cover portion 220 in the Z-dimension and can connect the interior of the housing case 200 (shown in FIG. 2), to the outside.

Depending on the embodiment, a fire originating from any one of a plurality of battery cells 100 may cause flames to be emitted from that particular battery cell 100. Consequently, there is a risk that flames may propagate from that particular battery cell 100 to adjacent battery cells 100.

According to an embodiment of the present disclosure, the first type of venting hole 240 and the second type of venting hole 250 can rapidly discharge air from inside the housing case 200 or the battery assembly 1, while communicating the interior space of the housing case 200 with the exterior. For example, the first type of venting hole 240 and the second type of venting hole 250 are connected to the exterior of the battery assembly 1, thereby preventing a rapid increase in pressure and temperature inside the housing case 200. Accordingly, the battery assembly 1 according to an embodiment of the present disclosure can relatively reduce the extent to which flames generated in any one battery cell 100 among a plurality of battery cells 100 propagate to a battery cell 100 adjacent to the any one battery cell 100.

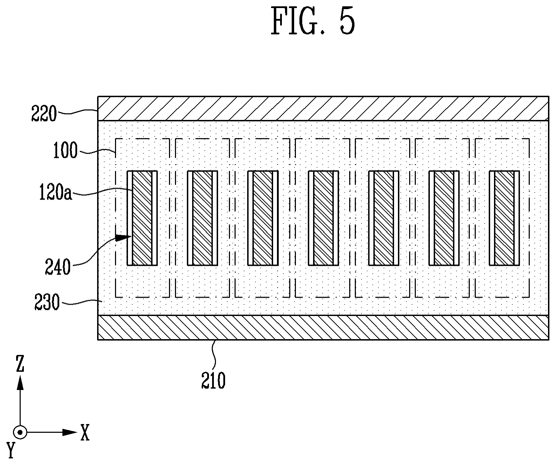

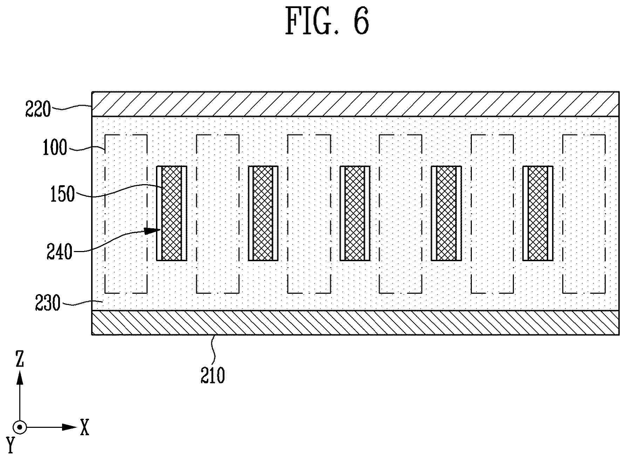

FIG. 5 is a schematic diagram illustrating an example of a side view of the battery assembly shown in FIG. 4. FIG. 6 is a schematic diagram illustrating another example of the side view of the battery assembly shown in FIG. 4.

Referring to FIG. 5, each of one or more first type of venting hole 240 may be arranged to align with each of a plurality of battery cells 100. For example, any one of a first type of venting hole 240 may be aligned with any one of the battery cells 100 in the Y-dimension.

According to an embodiment, at least a portion of one or more first type of venting hole 240 may be arranged to be aligned with a cell tab 120a, referring to FIG. 2, of a battery cell within the plurality of battery cells 100. For example, referring to FIG. 1, when viewing the battery assembly 1 in the Y-dimension, each of one or more first type of venting hole 240 may overlap the cell tab 120a of the plurality of battery cells 100 in the Y-dimension. Accordingly, at least a portion of the cell tab 120a may be exposed in the Y-dimension and may communicate with the exterior.

The arrangement of the first type of venting holes in the one or more end plates 230 is not particularly limited. In one embodiment, the first type of venting holes 240 are arranged at regular intervals in the at least one the end plate along the stacking direction of the battery cells 100. For example, two or more of the first type of venting hole 240 penetrating at least a portion of the end plate 230 may perforate the end plate along (or substantially along) the X-dimension.

Depending on the embodiment, the first type of venting hole 240 may be arranged in multiple rows in the one or more end plates 230. For example, FIG. 5 shows the first type of venting hole 240 arranged in one row, but this is not limited thereto.

The shape of the first type of venting hole is not particularly limited. In one embodiment, the first type of venting hole 240 may have a square shape. Depending on the embodiment, the first type of venting hole 240 may have a polygonal shape such as a triangle or pentagon. In another embodiment, the first type of venting hole 240 may have a circular or elliptical shape.

Referring to FIG. 6, according to another embodiment of the present disclosure, at least a portion of one or more first type of venting holes 240 may be arranged to be aligned with one or more of the barrier members 150. For example, based on the Y-dimension, the first type of venting hole 240 may be arranged to be aligned with one or more of the barrier members 150. Accordingly, referring to FIG. 2, at least a portion of the barrier member 150 may be in communication with the exterior of the battery assembly 1.

Depending on the embodiment, the first type of venting hole 240 may not be aligned with the battery cell 100. For example, the first type of venting hole 240 may be aligned with the battery cell 100 in the Y-dimension, but may instead be aligned with the space between adjacent battery cells 100.

In an embodiment, the horizontal length of a first type of venting hole 240 in the X-dimension may be longer than the horizontal length of the barrier member 150 in the same X-dimension. For example, when viewed from the Y-dimension, the horizontal length of the first type of venting hole 240 may be longer than the horizontal length of the barrier member 150. However, this is merely illustrative and not limiting. For example, the open cross-sectional area of the first type of venting hole 240 may differ from that shown in FIGS. 5 and 6.

According to an embodiment, the first type of venting hole 240 may be arranged in a plurality of rows. For example, the first type of venting hole 240 may be arranged in two rows in the X-dimension. Accordingly, referring to FIG. 2, the barrier member 150 may be exposed in the Y-dimension and may be in communication with the exterior of the battery assembly 1.

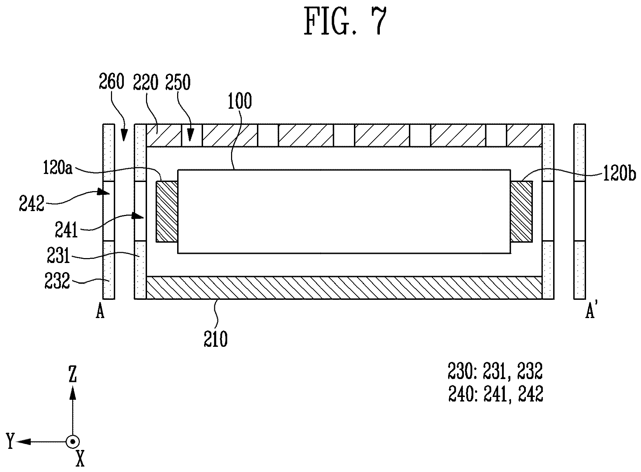

FIG. 7 is a schematic cross-sectional view illustrating another embodiment of the battery assembly along line AA' in FIG. 1.

Referring to FIGS. 2 and 7, the at least one end plate 230 each have a length dimension that extends parallel to the stacking direction of the battery cell 100. The at least one end plate 230 may have a double-wall structure. For example, each end plate may comprise a first end plate member 231 and a second end plate member 232, and together form a first side of the housing case 200. For example, the first end plate member 231 and the second end plate member 232 has a length dimension in the X-dimension and together, may form the first side of the housing case 200 in the Y-dimension.

The second end plate member 232 may be spaced apart from the first end plate member 231 member in the dimension in which the cell tab 120a of the plurality of battery cells 100 protrude (e.g., the Y-dimension). For example, the first end plate member 231 and the second end plate member 232 may be arranged spaced apart in the Y-dimension by a predetermined gap distance. Accordingly, referring to FIG. 1, the battery assembly 1 according to this disclosure can relatively prevent flames originating from any one of the plural battery cells 100 from propagating to adjacent battery cells 100.

The battery assembly 1 according to another embodiment of the present disclosure may comprise one or more first member sub-venting holes 241 and one or more second member sub-venting holes 242, each penetrating the at least one end plate 230. For example, the battery assembly 1 may comprise one or more first member sub-venting holes 241 penetrating the first end plate member 231 and one or more second member sub-venting holes 242 penetrating the second end plate member 232. Each of the first and second member sub-venting holes may penetrate their respective end plate member in a thickness dimension of the plate (e.g., the Y-dimension), which is perpendicular to the stacking direction and height dimension of the battery assembly.

The one or more first member sub-venting holes 241 and the one or more second member sub-venting holes 242 may be arranged proximal to the cell tab 120 of the battery cell 100. For example, the first member sub-venting holes 241 and the second member sub-venting holes 242 may be positioned proximal to the cell tab 120 in the Y-dimension.

The first member sub-venting holes 241 and the second member sub-venting holes 242 may be openings formed in the dimension in which the cell tab 120 of a plurality of battery cells 100 protrude. Accordingly, the first member sub-venting holes 241 and the second member sub-venting holes 242 may communicate the interior space of the housing case 200 with the exterior.

The battery assembly 1 may further comprise one or more of a third type of venting hole 260. The third type of venting hole 260 may communicate at least a portion of the gap formed by and being between the first end plate member 231 and the second end plate member 232, with the exterior of the housing case 200 and along the height dimension of the housing case 200. For example, a gap may be formed as the first end plate member 231 and the second end plate member 232 are spaced apart in the Y-dimension. In this case, the third type of venting hole 260 may communicate the exterior of the housing case 200 with the gap, e.g., in the Z-dimension.

The third type of venting hole 260 may open the gap in the X-dimension. In other words, the third type of venting hole 260 may fully open the gap in the X-dimension. However, this is merely illustrative and not limiting. For example, the third type of venting hole 260 may communicate at least a portion of the gap with the exterior of the housing case 200 in the X-dimension. That is, at least a portion of the first end plate member 231 and the second end plate member 232 may contact each other, while the third type of venting hole 260 may connect the gap formed between the non-contacting and remaining portions of the first end plate member 231 and the second end plate member 232 that are spaced apart to the exterior of the housing case 200.

According to another embodiment of the present disclosure, the propagation of flames resulting from a fire occurring inside the battery assembly 1 can be relatively reduced. For example, an unintended fire may occur in any one of a plurality of battery cells 100. At this time, the first member sub-venting holes 241 can guide flames resulting from the fire in the one battery cell 100 to propagate in the Y-dimension. Furthermore, the second member sub-venting holes 242 can guide the flames guided by the first member sub-venting holes 241 along the Y-dimension to the exterior of the battery assembly 1. Moreover, the third type of venting hole 260 can guide the flames guided by the first member sub-venting holes 241 along the Z-dimension to the outside of the battery assembly 1. Accordingly, it is possible to prevent flames generated by a fire occurring inside the battery assembly 1 from propagating to adjacent other battery cells 100, thereby improving the thermal stability of the battery assembly 1.

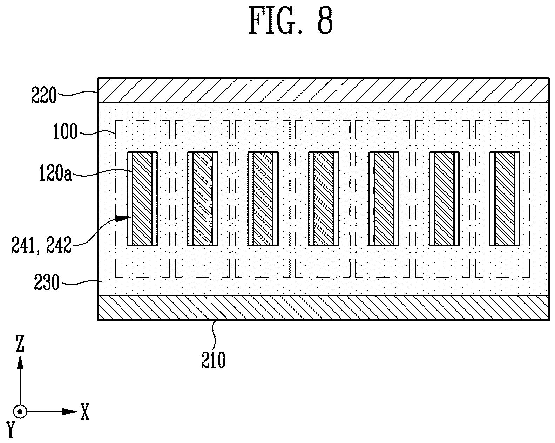

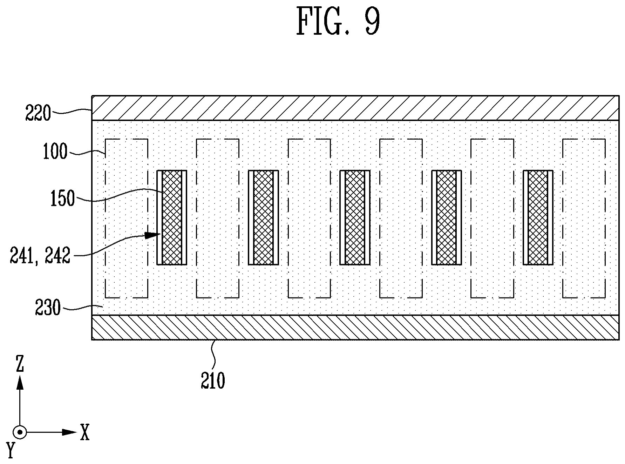

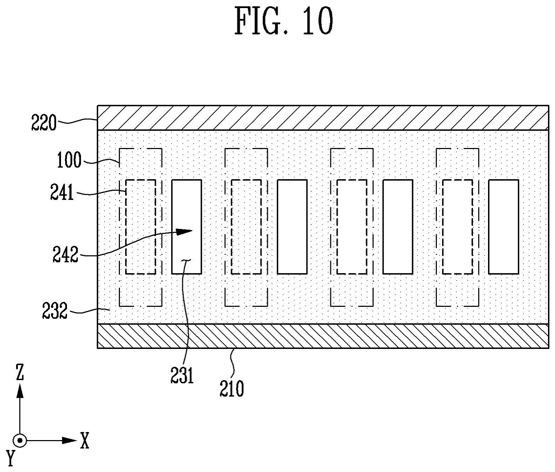

FIG. 8 is a schematic diagram illustrating an example of a side view of the battery assembly shown in FIG. 7. FIG. 9 is a schematic diagram illustrating another example of the side view of the battery assembly shown in FIG. 7. FIG. 10 is a schematic diagram illustrating another embodiment of the side of the battery assembly shown in FIG. 7.

Referring to FIG. 8, the first member sub-venting holes 241 and/or the second member sub-venting holes 242 may be arranged to be aligned with cell tabs 120a of a plurality of battery cells 100. For example, the first member sub-venting holes 241 and the second member sub-venting holes 242 may each be aligned with the cell tab 120a of a battery cell 100 in the Y-dimension. For example, the first member sub-venting holes 241 and the second member sub-venting holes 242 may be in communication with each other. Accordingly, the first member sub-venting holes 241 and the second member sub-venting holes 242 can communicate the space proximal to the cell tab 120a within the housing case 200 with the exterior of the housing case 200.

The first member sub-venting holes 241 and the second member sub-venting holes 242 may be arranged along the stacking direction of the battery cell 100. For example, the first member sub-venting holes 241 and the second member sub-venting holes 242 may be arranged along the X-dimension.

The first member sub-venting holes 241 and the second member sub-venting holes 242 may be aligned with each other in the dimension in which the cell tabs 120a of a plurality of battery cells 100 protrude. For example, the first member sub-venting holes 241 and the second member sub-venting holes 242 may be aligned in the Y-dimension. Accordingly, referring to FIG. 2, the cell tabs 120a according to this disclosure can be efficiently vented to the exterior of the battery assembly 1, thereby improving the thermal stability of the battery assembly 1.

According to the embodiment, the first member sub-venting holes 241 and the second member sub-venting holes 242 may be arranged in a plurality of rows. For example, FIG. 5 shows the first member sub-venting holes 241 and the second member sub-venting holes 242 arranged in a single row, but this is not limited thereto.

The first member sub-venting holes 241 and the second member sub-venting holes 242 may have a square shape in the plane. In an embodiment, the first member sub-venting holes 241 and the second member sub-venting holes 242 may have a polygonal shape such as a triangle or pentagon in the plane. In an embodiment, the first member sub-venting holes 241 and the second member sub-venting holes 242 may have a circular or elliptical shape in the plane. In an embodiment, the first member sub-venting holes 241 and the second member sub-venting holes 242 may have different shapes.

In an embodiment, the first member sub-venting holes 241 and the second member sub-venting holes 242 may have different areas on a planar surface. For example, the member first sub-venting holes 241 may have a larger area than the second member sub-venting holes 242 in the plane. In other words, the first member sub-venting holes 241 may have a rectangular shape with a larger area than the second member sub-venting holes 242 in the plane.

Referring to FIG. 9, at least one of the first member sub-venting holes 241 and the second member sub-venting holes 242 may be arranged to align with the barrier member 150. For example, the first member sub-venting holes 241 and the second member sub-venting holes 242 may align with the barrier member 150 in the Y-dimension. Accordingly, at least a portion of the barrier member 150 may be in communication with the exterior of the battery assembly 1.

At least one of the first member sub-venting holes 241 and the second member sub-venting holes 242 may not align with the battery cell 100 in a planar direction. For example, the first member sub-venting holes 241 and the second member sub-venting holes 242 may not align with the battery cell 100 in the Y-dimension, but may align with the space between adjacent battery cells 100.

Referring to FIG. 10, the first member sub-venting holes 241 and the second member sub-venting holes 242 may be arranged spaced apart from each other by a sub-vent spacing distance in the stacking direction of a plurality of battery cells 100. For example, the first member sub-venting holes 241 and the second member sub-venting holes 242 may be arranged spaced apart from each other in the X-dimension by a sub-vent spacing distance on a plane viewed in the Y-dimension. In other words, the first member sub-venting holes 241 and the second member sub-venting holes 242 may not align each other on a plane viewed in the Y-dimension.

According to an embodiment, the first member sub-venting holes 241 may be arranged to align with a plurality of battery cells 100 in the Y-dimension on a plane. For example, referring to FIG. 7, at least a portion of the first member sub-venting holes 241 may align with the cell tabs 120 of the plurality of battery cells 100 in the Y-dimension.

According to an embodiment, the second member sub-venting holes 242 may be arranged such that they do not align with a plurality of battery cells 100 in the Y-dimension on a plane. Furthermore, the second member sub-venting holes 242 may not align with the first member sub-venting holes 241 in the Y-dimension on a plane. Accordingly, the first end plate member 231 may be exposed in the Y-dimension, and the second member sub-venting holes 242 may discharge heat from the space proximal to the first end plate member 231 to the exterior, e.g., in the Y-dimension.

The above description is merely an example applying the principles of the present disclosure, and other configurations may be further included without departing from the scope of the disclosure.

It is understood by those skilled in the art that the plurality of exemplary embodiments described above are specific examples of the following aspects.

Aspect 1: A battery assembly, comprising: a plurality of battery cells stacked along a stacking direction; and a housing case comprising the plurality of battery cells and an end plate that forms a first side of the housing case; wherein the end plate has a length dimension that extending parallel to the stacking direction and a thickness dimension perpendicular to the length dimension; and wherein the end plate comprises one or more first type of venting holes extending through the end plate.

Aspect 2: The battery assembly according to Aspect 1, wherein each of the battery cells comprises a cell tab and wherein at least a portion of the one or more first type of venting holes is arranged to align with one or more of the cell tabs.

Aspect 3: The battery assembly according to Aspect 1, further comprising: one or more barrier members, each barrier member having a pad shape and disposed between adjacent battery cells within the plurality of battery cells along the stacking direction.

Aspect 4: The battery assembly according to Aspect 3, wherein at least one of the one or more first type of venting holes is arranged to align with at least one of the one or more barrier members.

Aspect 5: The battery assembly according to Aspect 1, comprising two or more first type of venting holes, wherein two or more of the first type of venting holes are arranged in the end plate along the stacking direction.

Aspect 6: The battery assembly according to Aspect 1, further comprising: a cover portion coupled to the end plate and forming a third side of the housing case, wherein the cover portion has a cover thickness dimension parallel to a height dimension of the housing case and comprises a second type of venting hole extending through the cover portion in the cover portion thickness dimension.

Aspect 7: A battery assembly, comprising: a plurality of battery cells stacked along a stacking direction; and a housing case comprising the plurality of battery cells and comprising an end plate that forms a first side of the housing case and comprises a first end plate member and a second end plate member; wherein the first end plate member comprises one or more first member sub-venting holes that penetrate the first end plate member; wherein the second end plate member comprises one or more second member sub-venting holes that penetrate the second end plate member; and wherein the second end plate member is spaced apart from the first end plate member by a gap.

Aspect 8: The battery assembly according to Aspect 7, wherein each of the battery cells comprises a cell tab and wherein at least one of the first member sub-venting holes and the second member sub-venting holes are arranged to align with one or more of the cell tabs of the plurality of battery cells.

Aspect 9: The battery assembly according to Aspects 7 or 8, wherein each of the first member sub-venting holes is aligned with a corresponding one of the second member sub-venting holes.

Aspect 10: The battery assembly according to Aspects 7 or 8, wherein the first member sub-venting holes and the second member sub-venting holes are spaced apart from each other by a sub-vent spacing distance.

Aspect 11: The battery assembly according to Aspect 7, further comprising: one or more barrier members, each barrier member having a pad shape and disposed between adjacent battery cells within the plurality of battery cells along the stacking direction.

Aspect 12: The battery assembly according to Aspect 11, wherein at least one of the first member sub-venting holes and the second member sub-venting holes are arranged to align with one of the barrier members.

Aspect 13: The battery assembly according to Aspect 7, wherein the first member sub-venting holes and the second member sub-venting holes are in communication with each other.

Aspect 14: The battery assembly according to Aspect 7, further comprising: a cover portion connected to the end plate and forming a third side of the housing case, wherein the cover portion comprises a second type of venting hole that penetrates the cover portion in a cover plate thickness dimension, which is parallel to a height dimension of the housing case.

Aspect 15: The battery assembly according to claim 7, further comprising: a third type of venting hole providing fluid communication between at least a portion of the gap between the first end plate member and the second end plate member and an exterior of the housing case along a height dimension of the housing case.

## Claims

1. A battery assembly, comprising:
a plurality of battery cells stacked along a stacking direction; and
a housing case comprising the plurality of battery cells and an end plate that forms a first side of the housing case;
wherein the end plate has a length dimension that extending parallel to the stacking direction and a thickness dimension perpendicular to the length dimension; and wherein the end plate comprises one or more first type of venting holes extending through the end plate.

2. The battery assembly according to claim 1, wherein each of the battery cells comprises a cell tab and wherein at least a portion of the one or more first type of venting holes is arranged to align with one or more of the cell tabs.

3. The battery assembly according to claim 1, further comprising:
one or more barrier members, each barrier member having a pad shape and disposed between adjacent battery cells within the plurality of battery cells along the stacking direction.

4. The battery assembly according to claim 3, at least one of the one or more first type of venting holes is arranged to align with at least one of the one or more barrier members.

5. The battery assembly according to claim 1, comprising two or more first type of venting holes, wherein two or more of the first type of venting holes are arranged in the end plate along the stacking direction.

6. The battery assembly according to claim 1, further comprising:
a cover portion coupled to the end plate and forming a third side of the housing case,
wherein the cover portion has a cover thickness dimension parallel to a height dimension of the housing case and comprises a second type of venting hole extending through the cover portion in the cover plate thickness dimension.

7. A battery assembly, comprising:
a plurality of battery cells stacked along a stacking direction; and
a housing case comprising the plurality of battery cells and comprising an end plate that forms a first side of the housing case and comprises a first end plate member and a second end plate member;
wherein the first end plate member comprises one or more first member sub-venting holes that penetrate the first end plate member;
wherein the second end plate member comprises one or more second member sub-venting holes that penetrate the second end plate member; and
wherein the second end plate member is spaced apart from the first end plate member by a gap.

8. The battery assembly according to claim 7, wherein each of the battery cells comprises a cell tab and wherein at least one of the first member sub-venting holes and the second member sub-venting holes are arranged to align with one or more of the cell tabs of the plurality of battery cells.

9. The battery assembly according to claims 7 or 8, wherein each of the first member sub-venting holes is aligned with a corresponding one of the second member sub-venting holes.

10. The battery assembly according to claims 7 or 8, wherein the first member sub-venting holes and the second member sub-venting holes are spaced apart from each other by a sub-vent spacing distance.

11. The battery assembly according to claim 7, further comprising:
one or more barrier members, each barrier member having a pad shape and disposed between adjacent battery cells within the plurality of battery cells along the stacking direction.

12. The battery assembly according to claim 11, wherein at least one of the first member sub-venting holes and the second member sub-venting holes are arranged to align with one of the barrier members.

13. The battery assembly according to claim 7, wherein the first member sub-venting holes and the second member sub-venting holes are in communication with each other.

14. The battery assembly according to claim 7, further comprising:
a cover portion connected to the end plate and forming a third side of the housing case,
wherein the cover portion comprises a second type of venting hole that penetrates the cover portion in a cover portion thickness dimension, which is parallel to a height dimension of the housing case.

15. The battery assembly according to claim 7, further comprising:
a third type of venting hole providing fluid communication between at least a portion of the gap between the first end plate member and the second end plate member and an exterior of the housing case along a height dimension of the housing case.
